# EUROPÄISCHE PATENTSCHRIFT

(11) **EP 2 102 040 B1**
(45) Veröffentlichungstag und Bekanntmachung des Hinweises auf die Patenterteilung: **13.10.2010**
(21) Anmeldenummer: 07821372.5
(22) Anmeldetag: 16.10.2007
(51) Int. Cl.: B60S 1/08

(54) **ANTRIEBSVORRICHTUNG VON FAHRZEUGAGGREGATEN**
DRIVE DEVICE OF VEHICLE ASSEMBLIES
DISPOSITIF D'ENTRAINEMENT D'ORGANES DE VEHICULES

(30) Priorität: 05.12.2006 DE 102006057282
(43) Veröffentlichungstag der Anmeldung: 23.09.2009
(73) Patentinhaber: Robert Bosch GmbH, 70442 Stuttgart (DE)
(72) Erfinder: PAULI, Stephan, 77855 Achern (DE); BOHN, Roland, 77815 Buehl (DE)
(86) Internationale Anmeldenummer: PCT/EP2007/061006
(87) Internationale Veröffentlichungsnummer: WO 2008/068099

(56) Entgegenhaltungen:
- EP-A- 1 683 694
- DE-A1- 10 246 381
- FR-A- 2 865 981

## Beschreibung

### Stand der Technik

Die Erfindung betrifft eine Antriebsvorrichtung von Fahrzeugaggregaten, beispielsweise einer Front- oder Heckscheibenwischervorrichtung.

Aus dem Stand der Technik, wie er in der DE 102 46 381 A1 offenbart ist, ist ein Scheibenwischerantrieb bekannt. Der Scheibenwischerantrieb weist ein Getriebegehäuse auf, in welchem eine Ausgangswelle mit einem Schneckenrad angeordnet ist. Des Weiteren ist ein Polgehäuse mit einem Elektromotor vorgesehen, der eine Ankerwelle aufweist, die mit dem Schneckenrad der Ausgangswelle zusammenwirkt. Bestandteil des Scheibenwischerantriebs ist des Weiteren eine Leiterplatte, die in einer Aufnahme im Inneren des Getriebegehäuses angeordnet ist. Auf der Leiterplatte sind elektrische Bauelemente angeordnet, die die Ansteuerschaltung für den Elektromotor bilden. Hierbei sind auf der Leiterplatte auch mit einem Kommutator des Elektromotors zusammenwirkende Bürsten vorgesehen.

Eine solche Anordnung der Leiterplatte und der mit ihr verbundenen Ansteuerschaltung für den Elektromotor hat jedoch den Nachteil, dass für die Aufnahme der Leiterplatte zusätzlicher Bauraum in dem Getriebegehäuse bereitgestellt werden muss.

Auch EP-A-1 683 694 offenbart den Gegenstand des ersten Teil des Anspruchs 1.

Es ist daher die Aufgabe der Erfindung eine Antriebsvorrichtung für ein Fahrzeugaggregat bereitzustellen, bei der der Bauraum optimal ausgenutzt wird und die Bautiefe der Antriebsvorrichtung reduziert werden kann.

Dies Aufgabe wird durch eine Antriebsvorrichtung gemäß Anspruch 1 und einen Hilfsantrieb mit einer Antriebsvorrichtung gemäß Anspruch 10 gelöst.

Die Antriebsvorrichtung gemäß der Erfindung hat den Vorteil, dass kein zusätzlicher Bauraum für das Unterbringen der Steuerelektronik oder zumindest Teile davon notwendig ist. Des Weiteren kann der Platz auf dem Getrieberad ausgenutzt werden, so dass die Bautiefe verringert werden kann. Darüber hinaus kann die Elektronik auf dem Getrieberad vormontiert werden und später als Einheit eingebaut werden.

In einer bevorzugten Ausführungsform der Erfindung ist die Steuerelektronik auf wenigstens einer oder beiden Seiten des Getrieberads angeordnet. Dabei kann die Steuerelektronik eine Leiterplatte mit Leiterbahnen und einen Mikrokontroller aufweisen. Dies hat den Vorteil, dass der Platz auf dem Getrieberad optimal ausgenutzt werden kann und kein separater Bauraum in dem Getriebegehäuse für die Leiterplatte vorgesehen werden muss.

In einer weiteren bevorzugten Ausführungsform der Erfindung sind elektrische Bauelemente der Steuerelektronik wie Relais bzw. Magnetschalter, Spulen, optoelektronische Bauelemente und/oder Kondensatoren auf der Getrieberadoberfläche, in Vertiefungen und/oder Öffnungen des Getrieberads anordenbar. Das Anordnen in Vertiefung oder Öffnungen hat dabei den Vorteil, dass nicht nur die Fläche des Getrieberads sondern auch zusätzlich die Tiefe des Getrieberads als Bauraum ausgenutzt werden kann.

Gemäß einer anderen bevorzugten Ausführungsform der Erfindung sind Kontaktelemente einer Positionsbestimmungseinrichtung zum Bestimmen der Position eines Scheibenwischers, sowie eine Auswerteeinrichtung zum Auswerten der Signale der Kontaktelemente auf dem Getrieberad angeordnet. Dies hat den Vorteil, dass der Bauraum auf dem Getrieberad optimal ausgenutzt wird, indem nicht nur einzelne Kontaktelemente der Positionsbestimmungseinrichtung sondern auch die Auswerteeinrichtung als solches auf dem Getrieberad angeordnet wird.

Ein Ausführungsbeispiel der Erfindung wird nachstehend anhand der schematischen Figuren der Zeichnung näher erläutert. Es zeigt:
Fig. 1 eine schematische Ansicht einer Antriebsvorrichtung gemäß dem Stand der Technik,
Fig. 2 eine schematische Ansicht einer weiteren Antriebsvorrichtung gemäß dem Stand der Technik,
Fig. 3 ein schematische Ansicht einer erfindungsgemäßen Antriebsvorrichtung,
Fig. 4 eine schematische Seitenansicht der Antriebsvorrichtung gemäß Fig. 3.

In den Figuren sind nachfolgend gleiche oder ähnliche Teile mit gleichen Bezugszahlen versehen.

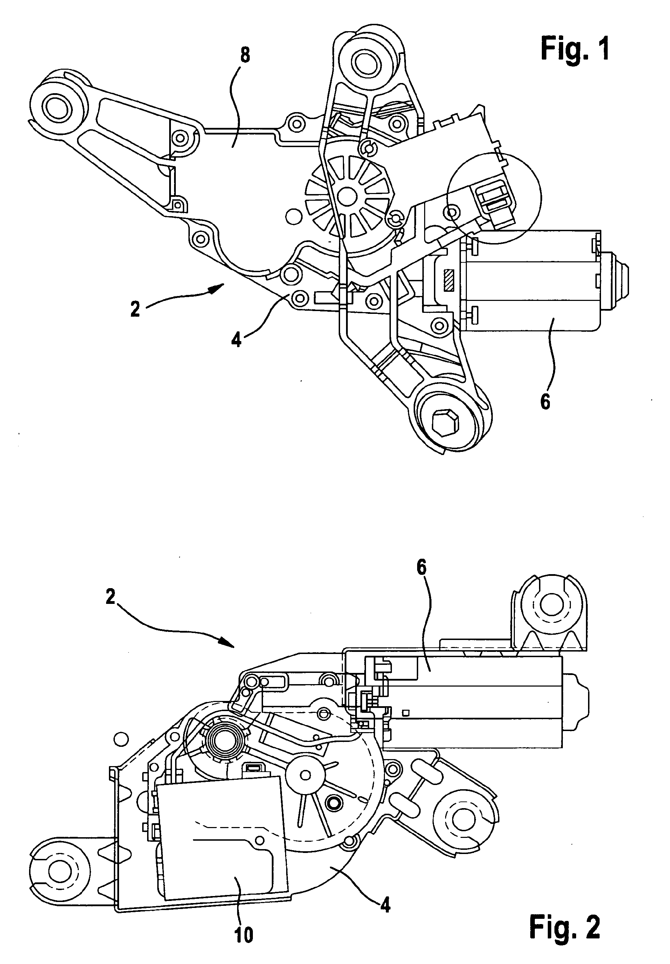

In Fig. 1 ist eine Antriebsvorrichtung 2 gemäß dem Stand der Technik gezeigt. Die Antriebsvorrichtung 2 weist dabei ein Getriebegehäuse 4 und ein Polgehäuse 6 mit einem Elektromotor auf. Das Getriebegehäuse 4 ist mit einem Getriebedeckel 8 versehen, in welchem eine Elektronikbox angeordnet ist. In dieser Elektronikbox ist die Steuerelektronik für den Elektromotor enthalten.

In Fig. 2 ist eine weitere Antriebsvorrichtung 2 gemäß dem Stand der Technik gezeigt. Die Antriebsvorrichtung 2 weist ebenfalls ein Getriebegehäuse 4 und ein Polgehäuse 6 mit einem Elektromotor auf. Hierbei ist eine Elektronikbox 10, mit der darin enthaltenen Steuerelektronik, als Anbauteil am Getriebegehäuse 4 befestigt.

Bei beiden Antriebsvorrichtungen 2, wie sie in Fig. 1 und 2 gezeigt sind, muss zusätzlicher Bauraum bereitgestellt werden, da die Steuerschaltung in einer Elektronikbox angeordnet ist, die in den Getriebegehäusedeckel 8 integriert ist bzw. als Anbauteil ausgebildet ist.

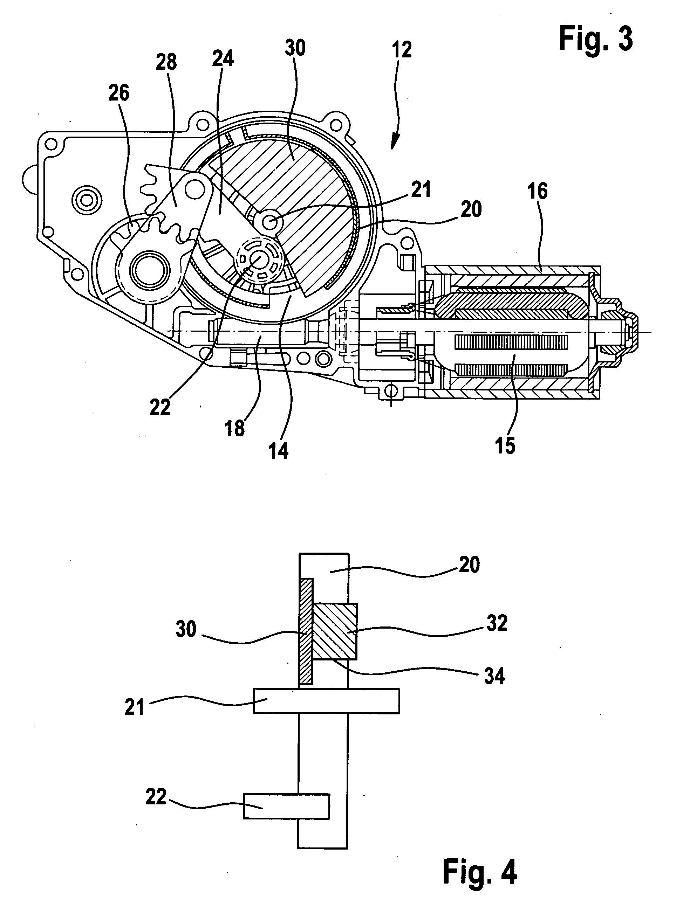

In Fig. 3 ist dagegen eine erfindungemäße Antriebsvorrichtung 12 gezeigt. Die Antriebsvorrichtung 12 ist hierbei zum Antreiben einer Scheibenwischervorrichtung als Fahrzeugaggregat ausgebildet. Dabei weist die Antriebsvorrichtung 12 einen Motor auf, hier einen Elektromotor 15 , der über ein Getriebe 14 eine Scheibenwischervorrichtung (nicht dargestellt) antreibt. Der Elektromotor 15 ist in einem Polgehäuse 16 angeordnet und treibt über eine Ankerwelle 18 ein Getrieberad 20 an. Das Getrieberad 20 sitzt auf einer Welle 21, wobei ein Zapfen 22 eines Umsetzgetriebes auf dem Getrieberad 20 angeordnet ist. Das Umsetzgetriebe ist dabei Teil des Getriebes 14. Auf dem Zapfen 22 ist ein Hebelelement 24 mit einem Teilzahnkranz befestigt. Das Hebelelement 24 steht wiederum mit einem weiteren Hebelelement 26 mit einem Teilzahnkranz in Eingriff, wobei beide Hebelelemente 24, 26 über ein Verbindungselement 28 miteinander verbunden sind. Dabei wird eine Drehbewegung des Elektromotors 15 in eine Hin- und Herbewegung umgewandelt und auf eine Scheibenwischervorrichtung (nicht dargestellt) übertragen.

Gemäß der Erfindung ist dabei zumindest ein Teil oder im Wesentlichen die gesamte Steuerelektronik 30 des Elektromotors 15, in wenigstens einem Getrieberad 20 integriert, das mit dem Elektromotor 15 gekoppelt ist. Die Steuerelektronik 30 ist dabei in Fig. 3, durch eine karierte Schraffur stark vereinfacht dargestellt. Es ist für den Durchschnittsfachmann offensichtlich, dass es eine Vielzahl von Möglichkeiten gibt das Getriebe 14 der Antriebsvorrichtung auszugestalten, um einen Motor mit einem Fahrzeugaggregat, wie einer Scheibenwischervorrichtung, zu koppeln. Dabei können beispielsweise Zahnräder und/oder Schneckenräder als Getrieberäder 20 eingesetzt werden. Die in Fig. 3 gezeigte Ausführungsform einer Antriebsvorrichtung 12 ist lediglich beispielhaft und dient der Erläuterung des erfindungsgemäßen Prinzips.

Über die Steuerelektronik 30 wird im allgemeinen die Drehzahl und/oder Drehrichtung des Elektromotors 15 gesteuert, bzw. verschiedene Betriebzustände der Scheibenwischervorrichtung. Im Wesentlichen sind dabei zwei Betriebsarten zu unterscheiden, der Dauerwischbetrieb und der Intervallwischbetrieb. Beim Dauerwischbetrieb schließt sich an das Ende eines Wischzyklus, beim Erreichen einer Parkposition des Scheibenwischers, unmittelbar der nächste Wischzyklus an. Dagegen verharrt der Scheibenwischer bei dem Intervallwischbetrieb nach Beendigung eines Wischzyklus zunächst eine bestimmte Zeit in einer Parkposition.

Zum Steuern der Scheibenwischervorrichtung wird daher über eine Positionsermittlungseinrichtung (nicht dargestellt), die geeignete Kontaktelemente aufweist, bestimmt, ob ein Scheibenwischer eine bestimmte Position, beispielsweise eine Parkposition, erreicht hat. Hierzu ist des Weiteren eine Auswerteeinrichtung (nicht dargestellt) vorgesehen, die die Signale der Kontaktelemente auswertet und entsprechend an einen Mikrokontroller weiterleitetet, der wiederum den Elektromotor 15 entsprechend ansteuert, um Betriebzustände, wie zuvor beschrieben, zu realisieren.

Dabei kann eine Positionsermittlungseinrichtung zur Bestimmung der Position eines Scheibenwischers beispielsweise eine elektrische Schleifkontaktanordnung aufweisen, mit Kontaktelementen und Gegenkontaktelementen, wobei die Kontaktelemente hierbei auf dem Getrieberad 20 und die Gegenkontaktelemente im Getriebegehäuse angeordnet werden können. Die durch die Schleifkontaktanordnung gewonnen Signale werden in der Auswerteeinrichtung ausgewertet.

Gemäß der Erfindung werden auf dem Getrieberad 20, beispielsweise einem Zahnrad, zumindest Teile der Steuerelektronik 30 angeordnet, darunter elektrische Bauelemente 32. So kann beispielsweise eine Leiterplatte mit der Steuerelektronik 30, darunter beispielsweise ein Mikrokontroller auf dem Getrieberad 20 angeordnet sein. Die Auswerteeinrichtung kann dabei ein Teil des Mikrokontrollers sein oder als separate Einrichtung beispielsweise ebenfalls auf der Leiterplatte angeordnet sein. Weiter können elektrische Bauelemente 32 wie Kondensatoren, Spulen und Relais der Steuerelektronik 30 auf dem Getrieberad 20 angeordnet werden, sowie Schleifkontaktelemente oder optoelektronische Bauelemente. Die Schleifkontaktelemente oder optoelektronischen Bauelemente können dabei Signale an den Mikrokontroller weiterleiten, wie Signale über die Fahrzeuggeschwindigkeit, wenn der Scheibenwischer abhängig von der Fahrzeuggeschwindigkeit gesteuert werden soll. Weiter können Signale an den Mikrokontroller weitergeleitet werden von Sensoren wie Regensensoren oder Hallsensoren oder Signale, die die Stellung eines Bedienhebels angeben, über den ein Fahrer einen gewünschten Betriebszustand der Scheibenwischervorrichtung einstellt. Außerdem besteht die Möglichkeit, die Elektronik über die Schleifkontaktelemente mit Spannung zu versorgen.

Wie in Fig. 4 schematisch gezeigt ist, kann beispielsweise die Leiterplatte mit dem Mikrokontroller auf der Getrieberadoberfläche befestigt werden. Dabei können elektrische Bauelemente 32 auf beiden Seiten des Getrieberads 20 vorgesehen werden. Um jedoch auch die Tiefe des Getrieberads 20 selbst auszunutzen, können in dem Getrieberad 20 Öffnungen 34 oder Vertiefungen vorgesehen werden zum Befestigen beispielsweise von Kondensatoren, Spulen oder Relais oder anderen elektronischen Bauelementen 32.

Dadurch kann der Bauraum in der Antriebsvorrichtung 12 optimal ausgenutzt werden und eine geringere Bautiefe der Antriebsvorrichtung erzielt werden. En weiterer Vorteil ist, dass der Montageaufwand reduziert werden kann, da die Elektronik und das Getrieberad 20 als Einheit montiert werden können. Dabei können die zuvor genannten elektronischen Bauelemente 32 nicht nur auf einer Seite des Getrieberads 20 vorgesehen werden, wie in Fig. 4 gezeigt ist, sondern es können prinzipiell beide Seiten des Getrieberads 20 ausgenutzt werden. Des Weiteren können die elektronischen Bauelemente 32 nicht nur auf einem Getrieberad 20 vorgesehen werden, sondern es kann auch der Bauraum von mehreren geeigneten Getrieberädern 20 eines Getriebes 14 ausgenutzt werden.

## Patentansprüche

1. Antriebsvorrichtung (12) für ein Fahrzeugaggregat, mit einem Antriebsmotor (15) zum Antreiben des Fahrzeugaggregats und einem Getriebe (14) mit wenigstens einem Getrieberad (20)
**dadurch gekennzeichnet, dass**
zumindest ein Teil oder die gesamte Steuerelektronik (30) des Antriebsmotors (15) auf dem Getrieberad (20) angeordnet ist.

2. Antriebsvorrichtung nach Anspruch 1, **dadurch gekennzeichnet, dass** die Steuerelektronik (30) auf wenigstens einer oder beiden Seiten des Getrieberads (20) angeordnet ist.

3. Antriebsvorrichtung nach Anspruch 1 oder 2, **dadurch gekennzeichnet, dass** die Steuerelektronik (30) eine Leiterplatte mit Leiterbahnen aufweist.

4. Antriebsvorrichtung nach Anspruch 3, **dadurch gekennzeichnet, dass** auf der Leiterplatte ein Mikrokontroller zum Steuern des Antriebsmotors (15) vorgesehen ist.

5. Antriebsvorrichtung nach Anspruch 4, **dadurch gekennzeichnet, dass** das Getrieberad (20) mit wenigstens einem Schleifkontakt bzw. einer Schleiffläche versehen ist, um ein Signal an den Mikrokontroller zu übertragen.

6. Antriebsvorrichtung nach einem der Ansprüche 1 bis 5, **dadurch gekennzeichnet**, das wenigstens ein elektrisches Bauelement (32) wie beispielsweise ein Relais bzw. ein Magnetschalter, eine Spule, ein optoelektronisches Bauelement und/oder ein Kondensator auf der Getrieberadoberfläche, in einer Vertiefung und/oder einer Öffnung (34) des Getrieberads (20) anordenbar ist.

7. Antriebsvorrichtung nach einem der Ansprüche 1 bis 6, **dadurch gekennzeichnet, dass** die Antriebsvorrichtung (12) eine Frontscheibenwischervorrichtung und/oder eine Heckscheibenwischervorrichtung als Fahrzeugaggregat antreibt.

8. Antriebsvorrichtung nach Anspruch 7, **dadurch gekennzeichnet, dass** Kontaktelemente einer Positionsbestimmungseinrichtung zum Bestimmen der Position eines Scheibenwischers auf dem Getrieberad (20) angeordnet sind.

9. Antriebsvorrichtung nach Anspruch 7, **dadurch gekennzeichnet, dass** eine Auswerteeinrichtung zum Auswerten der Signale der Kontaktelemente auf dem Getrieberad (20) angeordnet ist.

10. Scheibenwischervorrichtung mit einer Antriebsvorrichtung nach einem der Ansprüche 1 bis 9.

## Claims

1. Drive apparatus (12) for a vehicle assembly, having a drive motor (15) for driving the vehicle assembly, and having a gear mechanism (14) with at least one gear wheel (20),
**characterized in that**
at least some or all the control electronics (30) of the drive motor (15) are arranged on the gear wheel (20).

2. Drive apparatus according to Claim 1, **characterized in that** the control electronics (30) are arranged on at least one or both sides of the gear wheel (20).

3. Drive apparatus according to Claim 1 or 2, **characterized in that** the control electronics (30) have a printed circuit board with conductor tracks.

4. Drive apparatus according to Claim 3, **characterized in that** a microcontroller for controlling the drive motor (15) is provided on the printed circuit board.

5. Drive apparatus according to Claim 4, **characterized in that** the gear wheel (20) is provided with at least one sliding contact or a sliding surface, in order to transmit a signal to the microcontroller.

6. Drive apparatus according to one of Claims 1 to 5, **characterized in that** at least one electrical component (32), for example a relay or a magnetic switch, a coil, an optoelectronic component and/or a capacitor, can be arranged on the surface of the gear wheel, in a recess and/or an opening (34) in the gear wheel (20).

7. Drive apparatus according to one of Claims 1 to 6, **characterized in that** the drive apparatus (12) drives a front windscreen wiper apparatus and/or a rear windscreen wiper apparatus as the vehicle assembly.

8. Drive apparatus according to Claim 7, **characterized in that** contact elements of a position-determining device for determining the position of a windscreen wiper are arranged on the gear wheel (20).

9. Drive apparatus according to Claim 7, **characterized in that** an evaluation device for evaluating the signals from the contact elements is arranged on the gear wheel (20).

10. Windscreen wiper apparatus having a drive apparatus according to one of Claims 1 to 9.

## Revendications

1. Dispositif d'entraînement (12) pour un groupe de véhicule, comprenant un moteur d'entraînement (15) pour entraîner le groupe de véhicule et un engrenage (14) avec au moins une roue d'engrenage (20), **caractérisé en ce qu'**au moins une partie ou la totalité de l'électronique de commande (30) du moteur d'entraînement (15) est disposée sur la roue d'engrenage (20).

2. Dispositif d'entraînement selon la revendication 1, **caractérisé en ce que** l'électronique de commande (30) est disposé sur au moins un ou les deux côtés de la roue d'engrenage (20).

3. Dispositif d'entraînement selon la revendication 1 ou 2, **caractérisé en ce que** l'électronique de commande (30) présente un circuit imprimé avec des pistes conductrices.

4. Dispositif d'entraînement selon la revendication 3, **caractérisé en ce qu'**un microcontrôleur est prévu sur le circuit imprimé pour commander le moteur d'entraînement (15).

5. Dispositif d'entraînement selon la revendication 4, **caractérisé en ce que** la roue d'engrenage (20) est munie d'au moins un contact à friction ou d'une surface de friction pour transmettre un signal au microcontrôleur.

6. Dispositif d'entraînement selon l'une des revendications 1 à 5, **caractérisé en ce qu'**au moins un composant électrique (32), par exemple un relais ou un contacteur magnétique, une bobine, un composant optoélectronique et/ou un condensateur peut être disposé sur la surface de la roue d'engrenage, dans un enfoncement et/ou une ouverture (34) de la roue d'engrenage (20).

7. Dispositif d'entraînement selon l'une des revendications 1 à 6, **caractérisé en ce que** le dispositif d'entraînement (12) entraîne comme groupe de véhicule un mécanisme d'essuie-glace de pare-brise et/ou un mécanisme d'essuie-glace de lunette arrière.

8. Dispositif d'entraînement selon la revendication 7, **caractérisé en ce que** des éléments de contact d'un dispositif de détermination de la position sont disposés sur la roue d'engrenage (20) de manière à déterminer la position d'un essuie-glace.

9. Dispositif d'entraînement selon la revendication 7, **caractérisé en ce qu'**un dispositif d'interprétation est disposé sur la roue d'engrenage (20) de manière à interpréter les signaux des éléments de contact.

10. Mécanisme d'essuie-glace muni d'un dispositif d'entraînement selon l'une des revendications 1 à 9.
